# EUROPÄISCHE PATENTSCHRIFT

(11) **EP 2 688 714 B1**
(45) Veröffentlichungstag und Bekanntmachung des Hinweises auf die Patenterteilung: **03.06.2015**
(21) Anmeldenummer: 12710197.0
(22) Anmeldetag: 12.03.2012
(51) Int. Cl.: B25F 5/00, B23Q 5/027, B23D 51/16, B27B 19/00, B24B 23/04, B24B 41/04, B24B 47/16

(54) **HANDWERKZEUG MIT DREHOSZILLATIONSANTRIEB**
HAND-HELD TOOL COMPRISING A ROTARY-OSCILLATORY DRIVE
OUTIL MANUEL ENTRAÎNÉ EN ROTATION PAR OSCILLATIONS

(30) Priorität: 22.03.2011 DE 102011015117
(43) Veröffentlichungstag der Anmeldung: 29.01.2014
(73) Patentinhaber: C. & E. Fein GmbH, 73529 Schwäbisch Gmünd-Bargau (DE)
(72) Erfinder: KLABUNDE, Olaf, 89537 Giengen (DE)
(74) Vertreter: Witte, Weller & Partner Patentanwälte mbB
(86) Internationale Anmeldenummer: PCT/EP2012/054213
(87) Internationale Veröffentlichungsnummer: WO 2012/126753

(56) Entgegenhaltungen:
- WO-A1-96/27093
- WO-A1-2008/128804
- DE-A1- 10 356 068

## Beschreibung

Die Erfindung betrifft ein Handwerkzeug mit einem Gehäuse mit einem Getriebekopf, mit einer durch einen Motor rotatorisch antreibbaren Motorwelle, die über einen Exzenterkoppeltrieb mit einer Werkzeugspindel zu deren Antrieb koppelbar ist, wobei die Werkzeugspindel um ihre Längsachse drehoszillatorisch antreibbar und zur Aufnahme eines Werkzeugs ausgebildet ist, wobei der Exzenterkoppeltrieb ein Koppelglied aufweist, das mit der Motorwelle und der Werkzeugspindel gekoppelt ist, wobei das Koppelglied ferner an einem mit dem Gehäuse gekoppelten Trägerelement schwenkbar aufgenommen ist, wobei das Koppelglied als Hebel oder als Winkelhebel ausgebildet ist, wobei zwischen zwei Hebelabschnitten eine Lagerstelle zur Lagerung am Trägerelement vorgesehen ist, und wobei die Motorwelle im Wesentlichen senkrecht zur Werkzeugspindel angeordnet ist.

Aus der WO 96/27093 A1 ist ein derartiges Gerät in Form einer Säge für chirurgische Anwendungen bekannt. Ein ähnliches Handwerkzeug ist aus der DE 103 56 068 A1 bekannt.

Ein weiteres ähnliches Handwerkzeug ist aus der WO 2008/128804 A1 bekannt. Es handelt sich hierbei um eine Werkzeugmaschine mit einer Antriebseinheit zum Antrieb einer Antriebswelle und einer Abtriebswelle, auf der ein Werkzeug aufgenommen ist. Die Drehbewegung der Antriebswelle kann über eine Exzenterkoppeleinrichtung auf die Abtriebswelle übertragen werden.

Derartige Handwerkzeuge können etwa zum Schneiden oder Schleifen von Werkstücken genutzt werden, wobei die Oszillationsbewegung des Werkzeuges grundsätzlich eine präzise Führung bei hoher Schnitt- bzw. Abtragsleistung ermöglichen kann.

Bei dem bekannten Handwerkzeug kann der zu erzielende Verschwenkwinkel bauartbedingt nur einen relativ kleinen Wert innerhalb einer engen Bandbreite annehmen. Hierbei sind insbesondere die Exzentrizität der Antriebswelle sowie der Abstand zwischen der Antriebswelle und der Abtriebswelle bestimmende und begrenzende Auslegungsparameter. So schlägt die WO 2008/128804 A1 vor, zwischen der Antriebswelle und der Abtriebswelle eine Massenausgleichseinrichtung vorzusehen, die jedoch einen bestimmten Abstand zwischen der Antriebswelle und der Abtriebswelle erforderlich macht. Somit verlängert sich der Hebelarm eines Mitnehmers der Abtriebswelle, über den die Antriebswelle auf diese einwirkt. Infolgedessen verringert sich der an der Abtriebswelle zu erzielende Verschwenkwinkel bei gleichbleibender Exzentrizität der Antriebswelle.

Vor diesem Hintergrund liegt der Erfindung die Aufgabe zugrunde, ein Handwerkzeug mit einem verbesserten Oszillationsantrieb anzugeben, bei dem unabhängig von gegebenen Ist-Positionen der Motorwelle oder der Werkzeugspindel ein gewünschter Verschwenkwinkel bereitgestellt werden kann und wobei der Verschwenkwinkel möglichst mit geringen baulichen Anpassungen aus einer großen Bandbreite ausgewählt werden kann. Weiterhin soll möglichst ein vibrationsarmer Betrieb des Handwerkzeugs ermöglicht werden.

Diese Aufgabe wird bei einem Handwerkzeug gemäß der eingangs genannten Art erfindungsgemäß dadurch gelöst, dass das Koppelglied um eine Achse verschwenkbar ist, die im Wesentlichen parallel zur Motorwelle angeordnet ist.

Die Aufgabe der Erfindung wird auf diese Weise gelöst.

Mit dem Koppelglied wird ein Hebel zwischen der Motorwelle und der Werkzeugspindel vorgesehen, der es ermöglicht, auch bei verschiedenen konstruktiv bedingten Relativlagen zwischen der Motorwelle und der Werkzeugspindel einen gewünschten Verschwenkwinkel der Werkzeugspindel zu erzielen. Hierbei ist es insbesondere nicht erforderlich, etwa eine Exzentrizität der Motorwelle an den gewünschten Verschwenkwinkel anzupassen.

Mit anderen Worten kann das Koppelglied als "Wippe" aufgefasst werden, das der Motorwelle und der Werkzeugspindel zwischengeschaltet ist. Dabei ist es beispielsweise bei gleich langen Armen der "Wippe" völlig unerheblich, welche Gesamtlänge vorliegt, da ein Hub an einem Ende der "Wippe" immer in einen entgegengesetzten Hub am anderen Ende der "Wippe" überführt wird.

Es versteht sich dabei, dass das Koppelglied unterschiedlich lange Arme aufweisen kann, entsprechend dem Verhältnis der Armlängen wird eine eingeleitete Bewegung, eingebracht etwa durch einen Exzenterabschnitt der Motorwelle, übersetzt. Dies kann grundsätzlich unabhängig von der Gesamtlänge des Koppelglieds erfolgen.

Auf diese Weise kann das Handwerkzeug an verschiedenste Einsatzbedingungen, die etwa verschiedene Verschwenkwinkel erforderlich machen, angepasst werden. Es wird dabei eine hohe gestalterische Freiheit bei der konstruktiven Auslegung gewährleistet.

Daneben kann die Gestaltung des Koppelgliedes als "Wippe" zur Reduktion des Vibrationsniveaus beitragen. Das Koppelglied überführt einen Eingangshub, etwa bewirkt durch den Exzenterabschnitt der Motorwelle, in einen entgegengerichteten Ausgangshub, der ein Verschwenken der Werkzeugspindel bewirken kann. Durch diese Maßnahme kann sich aufgrund der entgegengerichteten Massenverlagerungen ein Massenausgleich ergeben.

Die relevanten Hebelarmlängen ergeben sich durch den Abstand der Lagerstelle zum jeweiligen Koppelpunkt mit der Motorwelle und der Werkzeugspindel.

Gemäß einem weiteren Aspekt der Erfindung ist das Koppelglied als Doppelgabel ausgeführt und weist Kontaktflächen zur Übertragung der vom Motor erzeugten Antriebsbewegung in eine drehoszillatorische Abtriebsbewegung der Werkzeugspindel auf.

Dabei kann die vom Motor erzeugte Antriebsbewegung etwa als Umlauf des Exzenterabschnitts um eine Achse verstanden werden. Eine Komponente dieses Exzenterumlaufs kann dabei das Hin- und Herschwenken des Koppelgliedes bewirken. An einem dem Werkzeug zugewandten Ende der Doppelgabel kann die Schwenkbewegung auf die Werkzeugspindel übertragen werden.

Es kann dabei bevorzugt sein, wenn die Kontaktflächen jeder Gabel der Doppelgabel zueinander parallel und möglichst eben ausgestaltet sind. Dabei kann eine hohe Überdeckung bzw. Formgebundenheit gewährleistet werden, so dass auf Passungenauigkeiten zurückzuführende Störungen, wie etwa Klappern oder aber übermäßiger Verschleiß, vermieden werden können.

Es ist weiter bevorzugt, wenn die Kontaktflächen mit geeigneten Lagern zusammenwirken, die an der Motorwelle oder aber an der Werkzeugspindel aufgenommen sind.

Daneben ist es grundsätzlich vorstellbar, an der Werkzeugspindel eine Mitnehmergabel mit Kontaktflächen vorzusehen, die mit einem am Koppelglied aufgenommenen Lager zur Übertragung der Schwenkbewegung zusammenwirkt.

In zweckmäßiger Weiterbildung der Erfindung ist das Trägerelement relativ zum Gehäuse verlagerbar, wobei ein Stellglied vorgesehen ist, das mit dem Trägerelement zu dessen Verlagerung koppelbar ist.

Auf diese Weise können bei gegebenen Abmessungen des Koppelglieds die wirksamen Hebelarmlängen zwischen der Lagerstelle sowie der Motorwelle bzw. der Werkzeugspindel variiert werden, so dass die "Übersetzung" des Koppelgliedes angepasst werden kann. Es können dabei in einfacher Weise etwa bei gegebener Exzentrizität der Motorwelle lediglich durch Verlagerung des Koppelgliedes an der Werkzeugspindel verschiedene Verschwenkwinkel bewirkt werden, mit denen ein breites Spektrum an Einsatzmöglichkeiten abgedeckt werden kann. Dies erfolgt unabhängig von der Lagezuordnung zwischen der Motorwelle und der Werkzeugspindel.

Der sich bei der Werkzeugspindel ergebende Verschwenkwinkel kann etwa in Bezug auf die Leistungsfähigkeit für einen gegebenen Anwendungsfall oder aber zur Erzielung eines besonders günstigen Vibrationsniveaus optimiert werden. Auch nach einer Verlagerung können die Kontaktflächen weiterhin den Kontakt und damit die Kraftübertragung zwischen den beteiligten Komponenten, also etwa an der Motorwelle bzw. der Werkzeugspindel aufgenommenen Lagern mit dem Koppelglied, gewährleisten.

Gemäß einer weiteren Ausgestaltung der Erfindung ist das Trägerelement relativ zum Gehäuse translatorisch verschiebbar oder verschwenkbar.

Dabei bewirkt ein Verschieben des Trägerelements und des daran aufgenommenen Koppelglieds eine Veränderung der Hebelarmlängen zwischen dem Kipppunkt der "Wippe" und den Kontaktstellen mit der Motorwelle bzw. der Werkzeugspindel.

Ein Verschwenken kann etwa um eine Achse erfolgen, die senkrecht zu einer von der Längsachse der Werkzeugspindel und einer Längsachse der Motorwelle aufgespannten Ebene verläuft. Auch dabei können sich die wirksamen Hebelarmlängen verändern, wodurch sich die Übersetzung zwischen beiden Hebelarmen ändert.

Das Stellglied kann dabei etwa als Gewindespindel, Hubzylinder, Gleitstein oder Ähnliches ausgestaltet sein. Eine Betätigung kann motorisch oder aber von Hand erfolgen.

Gemäß einer weiteren Ausgestaltung ist es bevorzugt, wenn die Verlagerung des Trägerelements stufenlos oder aber zumindest mit hinreichend kleinen Intervallen erfolgen kann, so dass eine möglichst adaptive Einstellung und Anpassung auf sich ergebende Betriebsbedingungen ermöglicht wird.

Ein translatorisches Verschieben des Trägerelements kann eine grundsätzlich konstante Verstellcharakteristik ermöglichen. Mit anderen Worten, ein bestimmter Verstellhub bewirkt dabei grundsätzlich eine bestimmte, gleichbleibende Veränderung des Verhältnisses der Hebelarmlängen.

Bei einem Verschwenken des Trägerelements relativ zum Gehäuse kann je nach Ausgangslage eine progressive oder degressive Verstellcharakteristik erzielt werden. Entsprechend grundsätzlich bekannter trigonometrischer Funktionen können dabei bestimmte Verstellwinkel abhängig von der aktuellen Schwenkposition des Koppelglieds etwa besonders große oder aber besonders kleine Veränderungen der Hebelarmverhältnisse bewirken.

Es versteht sich, dass nach erfolgter Verstellung eine Fixierung des Trägerelements gegenüber dem Gehäuse erfolgen kann. Hierfür kann etwa auf Spannelemente oder Klemmelemente zurückgegriffen werden, ebenso ist eine Feststellung durch Selbsthemmung der beteiligten Komponenten denkbar.

In alternativer Ausgestaltung der Erfindung ist der Exzenterkoppeltrieb mit einer Massenausgleichseinrichtung gekoppelt, wobei der Exzenterkoppeltrieb dazu ausgebildet ist, die Massenausgleichseinrichtung in eine der drehoszillatorischen Abtriebsbewegung der Werkzeugspindel entgegengerichtete Ausgleichsbewegung zu versetzen.

Auf diese Weise kann ein effektiver Massenausgleich bewirkt werden, der dazu beitragen kann, das Vibrationsniveau beim Gebrauch des Handwerkzeugs weiter zu verringern. Die Ausgleichsbewegung kann grundsätzlich als Schwenkbewegung oder als translatorische Ausgleichsbewegung erfolgen.

Gemäß einer Weiterbildung dieser Ausgestaltung ist die Werkzeugspindel über einen Ausleger mit der Massenausgleichseinrichtung zu deren Antrieb gekoppelt.

Durch diese Maßnahme kann ein besonders einfacher Aufbau der Massenausgleichseinrichtung erfolgen. Dabei kann der Antrieb der Massenausgleichseinrichtung mittelbar durch den Exzenterkoppeltrieb bewirkt werden, indem dieser die Werkzeugspindel in eine Schwenkbewegung versetzt, die auch zum Antrieb der Massenausgleichseinrichtung genutzt werden kann. Dabei ist die Ausgleichsbewegung der Massenausgleichseinrichtung der Schwenkbewegung der Werkzeugspindel entgegengerichtet, es kann somit eine "Auslöschung" der beteiligten Massenkräfte erfolgen.

Gemäß einer weiteren Ausgestaltung dieser Ausführung weist die Massenausgleichseinrichtung ein Massestück auf, das an einem Lagerstück aufgenommen ist, das relativ zum Gehäuse translatorisch verschiebbar oder verschwenkbar ist.

Somit kann in grundsätzlich ähnlicher Weise wie bei der Verlagerung des Trägerelements des Koppelgliedes auch beim Massestück eine Verlagerung zur Anpassung der Massenausgleichseinrichtung an sich ergebende Einsatzzwecke und Betriebsbedingungen erfolgen. Das Massestück kann gezielt verlagert werden, um eine möglichst niedrige Schwingungsexposition zu gewährleisten, so dass ein langes, ermüdungsfreies Arbeiten ermöglicht werden kann.

Besonders bevorzugt ist es dabei, wenn sowohl die Massenausgleichseinrichtung als auch der Exzenterkoppeltrieb verstellbar gestaltet sind, so dass ggf. durch gezieltes Verfahren sowohl des Koppelglieds als auch des Massestücks optimale Betriebspunkte in Bezug auf Leistungsfähigkeit und Arbeitsergonomie angesteuert werden können.

Hierzu ist es einerseits vorstellbar, das Verfahren des Massestücks als auch das Verfahren des Koppelglieds in geeigneter Weise zu verknüpfen, so dass zum Verfahren beider Komponenten nur ein Stellglied betätigt werden muss. Alternativ können beide Komponenten separat verfahrbar gestaltet sein, wodurch sich grundsätzlich eine höhere Flexibilität ermöglichen lässt.

Gemäß einem weiteren Aspekt der Erfindung sind das Koppelglied und zumindest die Motorwelle oder die Werkzeugspindel über zumindest ein balliges Lager miteinander gekoppelt.

Ein balliges oder sphärisches Lager ermöglicht auch bei einer Neigung zwischen mit dem Lager verbundenen Komponenten einen hinreichenden Kontakt, so dass erhöhte Spannungen, Klemmungen oder gar ein erhöhtes Spiel am Lagersitz vermieden werden können. Insbesondere die Werkzeugspindel kann im Betrieb aufgrund der Schwenkbewegung gegenüber dem Koppelglied bestimmte Schrägstellungen einnehmen, dabei kann ein balliges Lager eine sichere und verschleißfreie Kraftübertragung gewährleisten.

Die Exzenterkoppeleinrichtung kann in verschiedenste Ausgangskonfigurationen und Bauräume integriert werden.

Gemäß einem weiteren Aspekt der Erfindung ist das Massestück um eine Achse verschwenkbar, die im Wesentlichen parallel zur Motorwelle angeordnet ist.

In alternativer Ausgestaltung ist das Massestück um eine Achse verschwenkbar, die im Wesentlichen senkrecht zur Motorwelle angeordnet ist.

Somit kann auch die Massenausgleichseinrichtung mit dem Massestück besonders flexibel in den vorhandenen Bauraum integriert werden.

Gemäß einer weiteren Ausgestaltung der Erfindung weist das Koppelglied eine Massenanhäufung zum Massenausgleich auf.

Auf diese Weise kann bereits bei der Gestaltung des Koppelglieds ein möglichst vibrationsarmer Betrieb des Handwerkzeugs verfolgt werden. Dabei kann die Massenanhäufung etwa an einer Stelle des Koppelglieds vorgesehen sein, die einem gedachten Abstand eines Massenschwerpunkts der ggf. mit einem Werkzeug versehenen Werkzeugspindel bezüglich ihrer Längsachse gegenüberliegt.

Diese Maßnahme kann zusätzlich oder aber alternativ zur separaten Massenausgleichseinrichtung vorgesehen sein.

Gemäß einem weiteren Aspekt der Erfindung weist die Werkzeugspindel einen Ausleger auf, der als Mitnehmergabel ausgebildet ist und mit einem an einem werkzeugseitigen Ende des Koppelglieds aufgenommenen Lager gekoppelt ist.

Somit können weiterhin zwei Gabelstücke vorgesehen sein, von denen jedoch nur eins am Koppelglied zur Kopplung mit der Motorwelle ausgebildet ist. Das andere Koppelstück kann an der Werkzeugspindel angeordnet sein und mit einem am Koppelglied vorgesehenen Lager, insbesondere einem balligen Lager, gekoppelt sein.

Weitere Merkmale und Vorteile der Erfindung ergeben sich aus der nachfolgenden Beschreibung mehrerer bevorzugter Ausführungsbeispiele unter Bezugnahme auf die Zeichnungen. Es zeigen:
- Fig. 1: eine perspektivische Ansicht eines erfindungsgemäßen Handwerkzeugs;
- Fig. 2: einen vereinfachten Schnitt durch das Handwerkzeug gemäß Fig. 1 im Bereich des Getriebekopfes;
- Fig. 3: einen vereinfachten Schnitt durch das Handwerkzeug gemäß Fig. 2 entlang der Linie III-III;
- Fig. 4: eine perspektivische vereinfachte symbolische Darstellung der Konfiguration des Handwerkzeugs gemäß Fig. 2;
- Fig. 5a, 5b: zwei vereinfachte symbolische Darstellungen eines Koppelglieds und sich ergebende Hebelarmlängen entlang zweier möglicher Verfahrpositionen;
- Fig. 6: eine vereinfachte Darstellung eines Schnitts durch einen Getriebekopf eines alternativen erfindungsgemäßen Handwerkzeugs;
- Fig. 7: einen vereinfachten Schnitt durch das Handwerkzeug gemäß Fig. 6 entlang der Linie VII-VII;
- Fig. 8: eine perspektivische vereinfachte symbolische Darstellung der Konfiguration des Handwerkzeugs gemäß Fig. 6;
- Fig. 9: eine perspektivische symbolische vereinfachte Darstellung der Konfiguration eines gegenüber Fig. 8 abgewandelten Handwerkzeugs;
- Fig. 10: einen weiteren vereinfachten Schnitt durch einen Getriebekopf eines alternativen Handwerkzeugs;
- Fig. 11: einen Schnitt durch das Handwerkzeug gemäß Fig. 10 entlang der Linie XI-XI ;
- Fig. 12: einen vereinfachten Schnitt durch ein weiteres alternatives erfindungsgemäßes Handwerkzeug im Bereich des Getriebekopfes;
- Fig. 13: einen vereinfachten Schnitt durch das Handwerkzeug gemäß Fig. 12 entlang der Linie XIII-XIII;
- Fig. 14a, 14b: vereinfachte Darstellungen zweier weiterer alternativer Stellungen des Exzenterkoppeltriebs des Handwerkzeugs gemäß Fig. 12;
- Fig. 15: einen vereinfachten Schnitt durch noch ein weiteres alternatives erfindungsgemäßes Handwerkzeug im Bereich des Getriebekopfes;
- Fig. 16: einen vereinfachten Schnitt durch das Handwerkzeug gemäß Fig. 15 entlang der Linie XVI-XVI;
- Fig. 17: eine perspektivische vereinfachte symbolische Darstellung des Handwerkzeugs gemäß Fig. 15;
- Fig. 18: zwei Ansichten eines Koppelgliedes, das zur Verwendung bei einem erfindungsgemäßen Handwerkszeug geeignet ist; und
- Fig. 19: zwei Ansichten eines alternativen Koppelgliedes, das zur Verwendung bei einem erfindungsgemäßen Handwerkszeug geeignet ist.

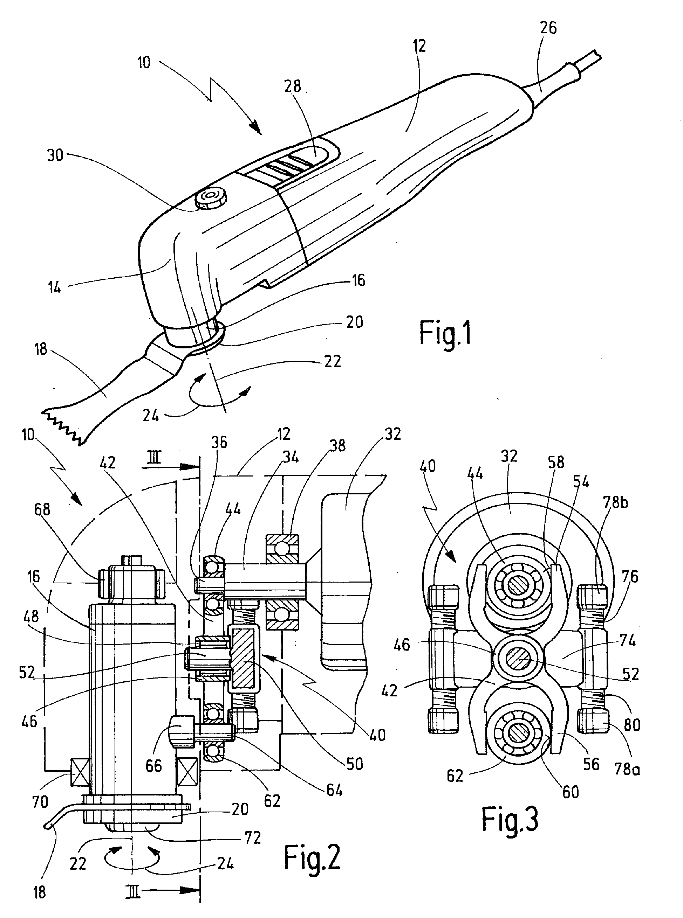

In Fig. 1 ist ein erfindungsgemäßes Handwerkzeug dargestellt und insgesamt mit dem Bezugszeichen 10 bezeichnet.

Das Handwerkzeug 10 weist ein Gehäuse 12 sowie in seinem vorderen Bereich einen Getriebekopf 14 auf, in dem eine Werkzeugspindel 16 aufgenommen ist, der ein Werkzeug 18 zugeordnet ist. Vorliegend handelt es sich dabei um ein Werkzeug zum Schneiden oder Sägen.

Das Werkzeug 18 ist mittels einer Werkzeugbefestigung 20 an einer Werkzeugaufnahme an einem Ende der Werkzeugspindel 16 festgelegt. Beim Betrieb des Handwerkzeugs 10 kann die Werkzeugspindel 16 mit hoher Frequenz, etwa 5000 bis 30.000 Oszillationen pro Minute, um einen kleinen Winkel, etwa 0,5° bis 7°, um ihre Längsachse 22 zum Antrieb des Werkzeugs 18 verschwenkt werden. Diese drehoszillatorische Bewegung ist durch einen mit 24 bezeichneten Doppelpfeil angedeutet.

Handwerkzeuge mit drehoszillatorischem Antrieb können zum Schneiden, ebenso aber auch zum Schleifen, Sägen, für Spachtel- oder Polieranwendungen genutzt werden. Die Charakteristik des Antriebs, nämlich kleine Verschwenkwinkel bei hoher Verschwenkfrequenz, erlaubt ein präzises und kraftschonendes Arbeiten, insbesondere auch bei beengten räumlichen Verhältnissen, etwa beim bündigen Schneiden oder Schleifen in Winkeln oder in Eckbereichen.

Ein Bediener kann das Handwerkzeug 10 an einem Griffbereich am Gehäuse 12 aufnehmen und mittels eines Betätigungsschalters 28 wahlweise aktivieren oder deaktivieren. Eine Versorgungsleitung, angedeutet mit dem Bezugszeichen 26, kann zur Energieversorgung eines Antriebsmotors dienen. Es versteht sich, dass das Handwerkzeug 10 anstatt einer leitungsgebundenen Energieversorgung auch leitungsunabhängig ausgeführt werden kann. Hierzu eignet sich insbesondere eine Energieversorgung mittels Akkumulatoren. Daneben ist etwa auch ein Antrieb mittels Druckluft denkbar.

Am Gehäuse 12 des Handwerkzeugs 10 ist ferner ein Stellschalter 30 vorgesehen, der dazu dienen kann, eine geeignete Oszillationscharakteristik einzustellen, insbesondere einen an sich ergebende Einsatzbedingungen möglichst optimal angepassten Verschwenkwinkel. Abhängig von Einflussgrößen wie etwa Werkstückparameter, insbesondere Werkstoffkennwerte des Werkstücks, Werkzeuggeometrie, etwa Art und Größe bzw. Zustand der Verzahnung bei einem Schneidwerkzeug oder aber Körnung bei einem Schleifwerkzeug, sowie Vorlieben bzw. Gewohnheiten eines Bedieners, beispielsweise schneller Vorschub mit hoher Kraft oder aber langsamer Vorschub mit verminderter Kraft, kann der optimale Verschwenkwinkel variieren. Somit kann ein verstellbarer Verschwenkwinkel grundsätzlich die Leistungsfähigkeit des Handwerkzeugs 10 bei erhöhter Arbeitsleistung verbessern.

Daneben kann der Stellschalter 30 alternativ oder zusätzlich zur Beeinflussung von im Handwerkzeug 10 vorgesehenen Einrichtungen zur Schwingungskompensation vorgesehen sein. Mit der hochfrequenten Drehoszillationsbewegung des Werkzeugs 18 an der Werkzeugspindel 16 kann grundsätzlich eine Schwingungsexposition einhergehen, die, wiederum abhängig von verschiedenen Randbedingungen, für den Anwender spürbar sein kann und die Arbeitsergonomie nachteilig beeinflussen kann. Mit dem Stellschalter 30 kann etwa eine Massenausgleichseinrichtung beeinflusst werden, um einen möglichst weitgehenden Massenausgleich bewirken zu können.

Es versteht sich, dass eine Mehrzahl von Stellschaltern am Handwerkzeug 10 vorgesehen sein kann, um die vorgenannten Funktionen bereitstellen zu können. Daneben sind ohne weiteres andere zu steuernde Funktionen denkbar, etwa die Beeinflussung der Oszillationsfrequenz der Werkzeugspindel 16.

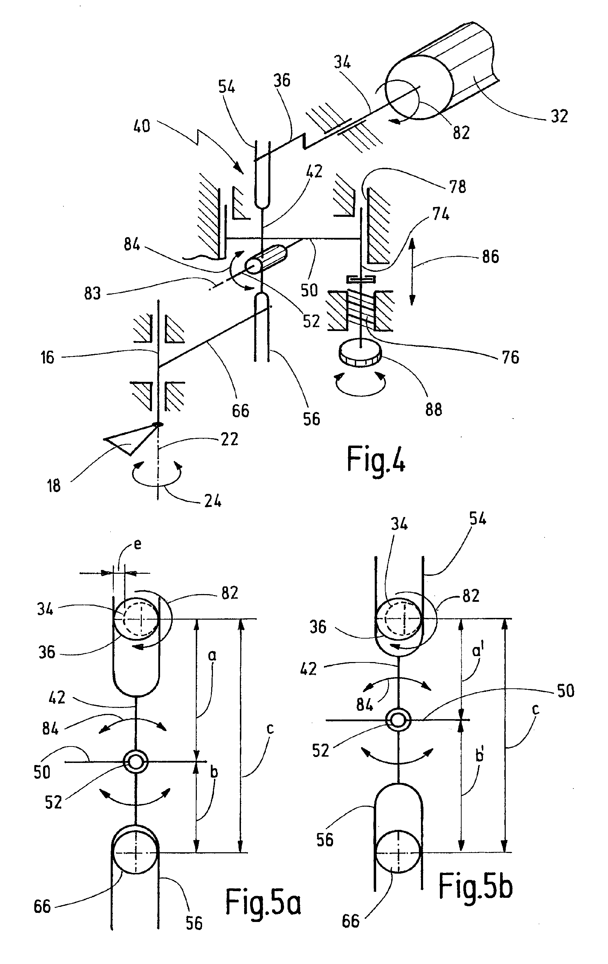

In Fig. 2 ist das Handwerkzeug 10 im Bereich des Getriebekopfes 14 geschnitten dargestellt. Aus Veranschaulichungsgründen ist das Gehäuse 12 in Fig. 2 lediglich durch eine gestrichelte Linie angedeutet, wogegen in Fig. 3, die einen Schnitt durch die Anordnung in Fig. 2 entlang der Linie III-III zeigt, aus Vereinfachungsgründen auf die Darstellung des Gehäuses 12 verzichtet wird. In Fig. 4 ist eine vereinfachte perspektivische Darstellung der Anordnung der Fig. 2 und 3 gezeigt, die auf symbolischen Mechanismenschaubildern beruht.

In Fig. 2 ist ein über ein Motorlager 38 im Gehäuse 12 aufgenommener Motor 32 angedeutet. Der Motor 32 treibt eine Motorwelle 34 an, die im Wesentlichen senkrecht zur Werkzeugspindel 16 angeordnet ist. Am der Werkzeugspindel 16 zugewandten Ende der Motorwelle 34 ist ein Exzenterabschnitt 36 angeordnet, vgl. auch Fig. 4. Beim Umlauf der Motorwelle 34, vgl. den mit 82 bezeichneten Pfeil in Fig. 4, wird der Exzenterabschnitt 36 auf einer exzentrischen Bahn bewegt, diese Bewegung dient zum Antrieb eines Exzenterkoppeltriebs 40.

Es versteht sich ferner, dass der Antrieb des Exzenterkoppeltriebs 40 grundsätzlich auch über weitere der Motorwelle 34 und dem Exzenterkoppeltrieb 40 zwischengeschaltete Wellen erfolgen kann, die einen Exzenterabschnitt 36 aufweisen. Auf diese Weise kann sich ergebenden Bauraumerfordernissen oder sonstigen Randbedingungen entsprochen werden, die etwa eine von der Anordnung in Fig. 2 abweichende Gestaltung der Lage und Orientierung der Motorwelle 34 und der Werkzeugspindel 16 zueinander erforderlich machen können.

Der Exzenterkoppeltrieb 40 weist ein Koppelglied 42 auf, das etwa in Form einer Doppelgabel ausgebildet ist. Der Exzenterabschnitt 36 der Motorwelle 34 ist über ein Exzenterlager 44 mit dem Koppelglied 42 zur Bewegungsübertragung gekoppelt. Der Umlauf des Exzenterabschnitts 36 bewirkt ein Verschwenken des Koppelgliedes 42.

Das Koppelglied 42 kann dabei um einen Trägerzapfen 52 eines Trägerelements 50 verschwenkt werden. Zur Aufnahme am Trägerzapfen 52 weist das Koppelglied 42 eine vorliegend beispielhaft etwa mittig angeordnete Lagerstelle 46 auf, in der ein Koppelgliedlager 48 aufgenommen ist, das dem Trägerzapfen 52 zugeordnet ist.

Wie aus Fig. 3 ersichtlich, kann das Koppelglied 42 eine motorseitige Gabel 54 sowie eine spindelseitige Gabel 56 aufweisen. An der motorseitigen Gabel 54 sind einander gegenüberliegende im Wesentlichen parallele Kontaktflächen 58 vorgesehen, die mit dem Exzenterlager 44 in Wirkverbindung stehen. Entgegen der Darstellung in Fig. 2 kann das Exzenterlager 44 alternativ auch eine zylinderförmige Außenkontur aufweisen, da bei der in den Fig. 2, 3 und 4 gezeigten Ausgestaltung sowohl der Umlauf des Exzenterabschnitts 36 als auch das Verschwenken des Koppelglieds 42 im Wesentlichen in der gleichen Ebene erfolgen. Wird beim Exzenterlager 44 eine ballige oder sphärische Ausgestaltung umgesetzt, so können die mit diesem korrespondierenden Kontaktflächen 58 der motorseitigen Gabel 54 zur Verbesserung der Schmiegung hierauf angepasst sein, also etwa jeweils eine zueinander parallele muldenförmige Erstreckung aufweisen. Auf diese Weise kann etwa bei einem balligen Lager statt eines punktuellen Kontakts eine Linienberührung bewirkt werden, wodurch die Flächenpressung auf die beteiligten Komponenten sinken kann.

Das Koppelglied 42 kann insbesondere symmetrisch ausgestaltet sein, wobei an der spindelseitigen Gabel 56 ebenso Kontaktflächen 60 vorgesehen sind, die mit einem spindelseitigen Lager 62 zusammenwirken, das mit der Werkzeugspindel 16 gekoppelt ist. Das spindelseitige Lager 62 ist über einen Zapfen 64 an einem Ausleger 66 der Werkzeugspindel 16 aufgenommen. In vorteilhafter Weise ist das spindelseitige Lager 62 als balliges oder sphärisches Lager ausgebildet, das eine gewisse Verkippung zwischen dem Zapfen 64, der mit einem Innenring des spindelseitigen Lagers 62 gekoppelt ist, und den Kontaktflächen 60, die mit einem Außenring des spindelseitigen Lagers 62 gekoppelt sind, toleriert. Eine derartige Verkippung kann etwa durch die oszillierende Schwenkbewegung der Werkzeugspindel 16 bewirkt werden. Dabei betragen übliche Verschwenkwinkel nur wenige Grad. Es versteht sich, dass das spindelseitige Lager 62 anstatt eines balligen Außenringes, wie in Fig. 2 angedeutet, alternativ einen balligen Innenring aufweisen kann. Auch auf diese Weise kann eine gewisse Verkippung ausgeglichen werden.

Es ist bevorzugt, wenn zumindest das Exzenterlager 44 oder das spindelseitige Lager 62 möglichst spielfrei in der motorseitigen Gabel 54 bzw. der spindelseitigen Gabel 56 aufgenommen sind. Damit kann bei der Hin- und Herbewegung des Koppelglieds 42 ein Klappern reduziert oder gar vollständig vermieden werden. Dies kann zu einem geräuscharmen und verschleißarmen Betrieb beitragen.

Die gewünschte Spielfreiheit oder Spielarmut kann dabei etwa im Rahmen der Fertigung durch geeignete Passungen und Toleranzen bewirkt werden. Ebenso ist die Verwendung sog. Spannlager möglich. Daneben kann eine Spielarmut oder Spielfreiheit grundsätzlich über federnde Elemente bewirkt werden. So kann etwa die Eigenelastizität des gabelförmigen Koppelglieds 42 genutzt werden, um zwischen Gabelarmen der motorseitigen Gabel 54 bzw. der spindelseitigen Gabel 56 das Exzenterlager 44 bzw. das spindelseitige Lager 62 unter leichter Vorspannung spielfrei aufzunehmen.

Die Werkzeugspindel 16 ist über vereinfacht dargestellte Spindellager 68, 70 im Gehäuse 12 des Handwerkzeugs 10 aufgenommen. Die Werkzeugbefestigung 20 zur Befestigung des Werkzeugs 18 ist über ein Befestigungselement 72, etwa ein Klemmelement, eine Befestigungsschraube oder eine Spannvorrichtung, an der Werkzeugspindel 16 festgelegt.

Das Trägerelement 50, an dessen Trägerzapfen 52 das Koppelglied 42 schwenkbar aufgenommen ist, kann grundsätzlich gestellfest im Gehäuse 12 angeordnet sein. Mit einer solchen Ausgestaltung kann durch eine durch das Koppelglied 42 verkörperte "Wippe" eine Umkehr der Schwenkorientierung zwischen dem Exzenterabschnitt 36 der Motorwelle 34 und dem Ausleger 66 der Werkzeugspindel 16 realisiert werden. Bereits dadurch kann das Betriebsverhalten, insbesondere das Vibrationsniveau des Handwerkzeugs 10 günstig beeinflusst werden.

Daneben kann durch geeignete Auslegung der Länge der motorseitigen Gabel 54 bzw. der spindelseitigen Gabel 56 eine Übersetzung bzw. Untersetzung des durch den Umlauf des Exzenterabschnitts 36 bewirkten Antriebsschwenkhubs in einen Abtriebsschwenkhub erfolgen, der über das spindelseitige Lager 62 an den Ausleger 66 der Werkzeugspindel 16 übertragen wird.

Es kann dabei in alternativer Weise weiter bevorzugt sein, das Trägerelement 50 mit dem Trägerzapfen 52 gegenüber dem Gehäuse 12 verfahrbar auszugestalten, um die durch das Koppelglied 42 bewirkte Übersetzung durch Variation der wirksamen Armlängen der motorseitigen Gabel 54 bzw. der spindelseitigen Gabel 56 zu beeinflussen.

Eine derartige Ausgestaltung wird nachfolgend anhand der Fig. 3, 4, 5a und 5b erläutert.

In Fig. 3 ist das Trägerelement 50 verfahrbar gestaltet. Hierzu ist ein Grundkörper 74 vorgesehen, der mit zumindest einer Spindel 76 zusammenwirkt, die an zumindest einem Führungselement 78 aufgenommen ist. Das Führungselement 78 kann dabei gestellfest am Gehäuse 12 aufgenommen sein. Mittels eines geeigneten Antriebs (in Fig. 3 nicht dargestellt) kann die Spindel 76 angetrieben werden, beispielsweise über ein Gewinde 80. Eine derartige Gewindespindel kann mit einem am Grundkörper 74 vorgesehenen Gegengewinde zur Verlagerung des Trägerelements 50 zusammenwirken.

Fig. 4 zeigt schematisch eine hierzu grundsätzlich geeignete Gestaltung, bei der der Motor 32 in oben geschilderter Weise die Motorwelle 34 mit dem Exzenterabschnitt 36 rotatorisch antreibt, wie durch einen mit 82 bezeichneten Pfeil angedeutet. Der Exzenterabschnitt 36 wirkt auf die motorseitige Gabel 54 des Koppelglieds 42 ein und treibt somit den Exzenterkoppeltrieb 40 an. Das Koppelglied 42 ist am Trägerzapfen 52 des Trägerelements 50 aufgenommen und kann um eine Schwenkachse 83 verschwenkt werden, wie durch einen mit 84 bezeichneten Doppelpfeil angedeutet. Diese Schwenkbewegung wird auf den mit der Werkzeugspindel 16 gekoppelten Ausleger 66 übertragen, der mit der spindelseitigen Gabel 56 des Koppelglieds 42 in Wirkverbindung steht. Somit wird die Werkzeugspindel 16 in eine Schwenkbewegung versetzt, das Werkzeug 18 wird um die Längsachse 22 drehoszillatorisch angetrieben, vgl. auch den Doppelpfeil 24. Zum Verfahren des Trägerelements 50 ist in Fig. 4 beispielhaft ein Stellglied 88 vorgesehen, das etwa manuell oder aber motorisch angetrieben werden kann. Das Stellglied 88 wirkt auf die Spindel 76, die etwa als Gewindespindel ausgeführt sein kann. Die Spindel 76 ist mit dem Grundkörper 74 des Trägerelements gekoppelt, der am Führungselement 78 aufgenommen ist. Wie durch einen mit 86 bezeichneten Doppelpfeil angedeutet, kann das Trägerelement 50 grundsätzlich translatorisch hin und her verfahren werden. Dabei verändern sich die wirksamen Hebelarmlängen des Koppelglieds 42. Das Stellglied 88 kann mit dem Stellschalter 30, vgl. Fig. 1, gekoppelt sein. Alternativ oder zusätzlich kann das Stellglied 88 über eine interne Steuereinrichtung des Handwerkzeugs 10 angesteuert werden.

Es versteht sich, dass etwa alternativ zu einer Gewindespindel andere Linearantriebe zur Realisierung der Verlagerung des Trägerelements 50 genutzt werden können. Es kann sich dabei etwa um Linearmotoren, Linearzylinder, Zahnstangentriebe, Schneckentriebe oder dgl. handeln. Zum Fixieren einer bestimmten Soll-Lage des Trägerelements 50 können geeignete Klemmelemente oder Stellelemente vorgesehen sein.

In Fig. 5a und 5b sind zwei mögliche Verfahrpositionen des Trägerelements 50 veranschaulicht. Dabei entspricht ein Abstand c dem Abstand zwischen der Motorwelle 34 und dem Ausleger 66. Der Abstand c bleibt auch beim Verfahren des Trägerelements 50 konstant. Mit a ist der Abstand zwischen der Motorwelle 34 und dem Trägerzapfen 52 des Trägerelements 50 bezeichnet, ein Abstand b veranschaulicht den Abstand zwischen dem Trägerzapfen 52 und dem Ausleger 66. In der in Fig. 5a gezeigten Position des Trägerelements 50 wird somit ein durch eine Exzentrizität e des Exzenterabschnitts 36 bewirkter Hub gemäß dem Verhältnis zwischen a und b in einen entsprechend kleinen Abtriebshub überführt, der das Verschwenken des Auslegers 66 bewirkt. Demgegenüber ist in Fig. 5b das Trägerelement 50 in eine Position verfahren, in der ein veränderter Abstand a' zwischen Motorwelle 34 und dem Trägerzapfen 52 kleiner als ein veränderter Abstand b' zwischen dem Trägerzapfen 52 und dem Ausleger 66 ist. Somit kann etwa ein entsprechend vergrößerter Hub des Auslegers 66 bewirkt werden.

Weitere Übersetzungsverhältnisse sind ohne weiteres vorstellbar und können grundsätzlich stufenlos angefahren werden. Dabei kann das Verhältnis zwischen a und b etwa im Bereich von ungefähr 1,1:1 bis ungefähr 1:1,1, vorzugsweise im Bereich von ungefähr 1,3:1 bis 1:1,3, weiter bevorzugt im Bereich von ungefähr 1,5:1 bis 1:1,5 variiert werden. Andere Übersetzungsspreizungen sind grundsätzlich denkbar.

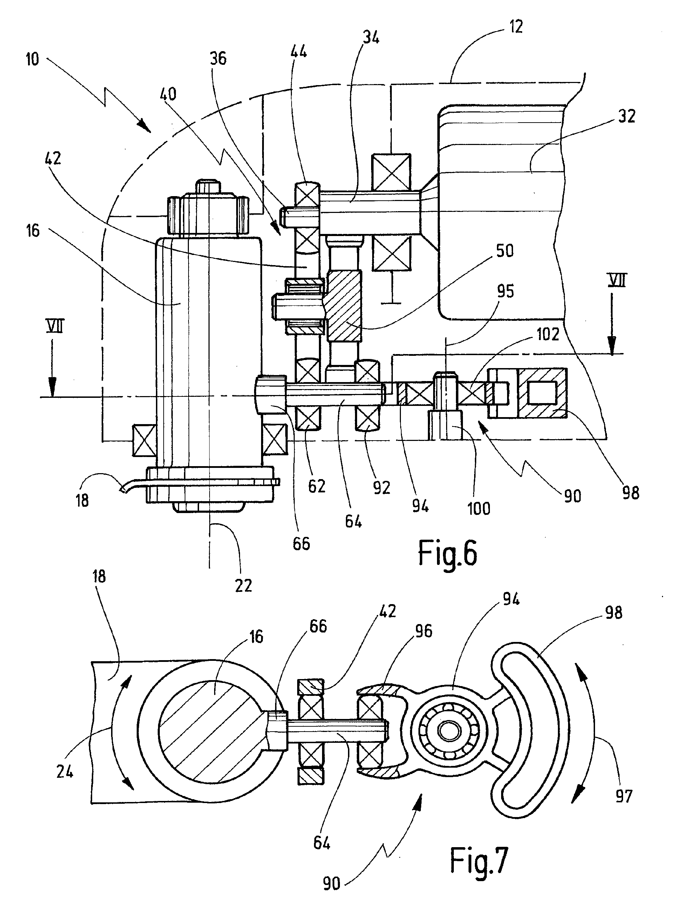

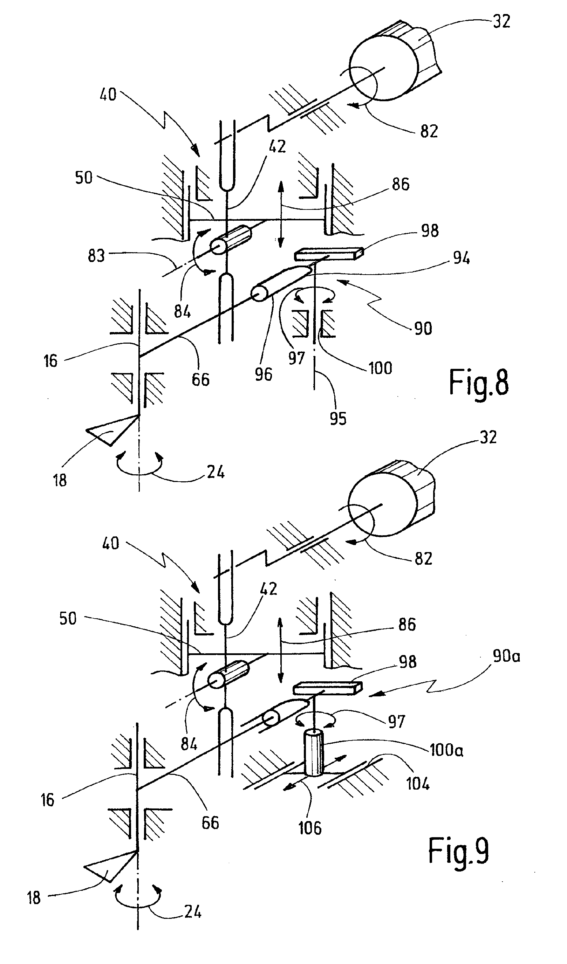

In den Fig. 6 und 7 ist eine weitere Ausgestaltung des Handwerkzeugs 10 dargestellt, die im Grundaufbau der Anordnung gemäß Fig. 2 entspricht. Ergänzend dazu ist in Fig. 8 eine korrespondierende perspektivische Darstellung mittels symbolischer Mechanismenschaubilder gezeigt.

Dabei ist die Anordnung zusätzlich mit einer Massenausgleichseinrichtung 90 versehen, die über ein Koppellager 92, das auf dem Zapfen 64 des Auslegers 66 der Werkzeugspindel 16 angeordnet ist, mit dem Exzenterkoppeltrieb 40 zusammenwirkt. Das Koppellager 92 kann als balliges Lager ausgeführt sein. Die Massenausgleichseinrichtung 90 weist ferner ein Massestück 94 auf, das mit einer Gabel 96 versehen ist, die mit dem Koppellager 92 zusammenwirkt. An seinem der Gabel 96 abgewandten Ende weist das Massestück 94 eine Ausgleichsmasse 98 auf. Das Massestück 94 ist über ein Schwenklager 102 auf einem Lagerstück 100 aufgenommen.

In Zusammenschau mit den Fig. 7 und 8 wird ersichtlich, dass eine durch den umlaufenden Exzenterabschnitt 36 der Motorwelle 34 bewirkte Schwenkbewegung des Koppelglieds 42 über das spindelseitige Lager 62 auf den Ausleger 66 übertragen wird, wobei die Werkzeugspindel 16 in eine korrespondierende Schwenkbewegung versetzt wird. Daneben wirkt der Ausleger 66 über den Zapfen 64 ferner als Antrieb des Koppellagers 92, das die Massenausgleichseinrichtung 90, insbesondere das Massestück 94 mit der Ausgleichsmasse 98, in eine zur Schwenkbewegung der Werkzeugspindel 16 korrespondierende, aber zu dieser entgegengerichtete Schwenkbewegung versetzt. Dabei oszilliert das Massestück 94 um eine Achse 95, wie durch einen mit 97 bezeichneten Doppelpfeil angedeutet, vgl. Fig. 8. Die Doppelpfeile 97 und 24 sind dabei einander entgegengerichtet.

Das Lagerstück 100 der Massenausgleichseinrichtung 90 kann gestellfest am Gehäuse 12 des Handwerkzeugs 10 aufgenommen sein. Alternativ kann es bevorzugt sein, wenn das Lagerstück 100 gegenüber dem Gehäuse 12 verfahrbar ist, um den Grad der Massenkompensation möglichst variabel auf sich ergebende Betriebsbedingungen einstellen zu können. Ein derartiger Aufbau ist schematisch in Fig. 9 dargestellt.

Dabei orientiert sich die Gestaltung grundsätzlich an Fig. 8, wobei statt des gestellfesten Lagerstücks 100 ein verlagerbares Lagerstück 100a vorgesehen ist, das entlang einer Führung 104 im Gehäuse 12 des Handwerkzeugs verfahrbar ist, wie durch einen mit 106 bezeichneten Doppelpfeil angedeutet. Durch die Verlagerung wird bei gegebenem Schwenkwinkel der Werkzeugspindel 16 der Schwenkwinkel des Massestücks 94 verändert. Bei gegebener Oszillationsfrequenz führt diese Maßnahme zu einer höheren oder niedrigeren Winkelbeschleunigung, die das Massestück 94, insbesondere die Ausgleichsmasse 98, erfährt. Es kann somit gezielt etwa bei Verwendung eines besonders großen, trägheitsbehafteten Werkzeugs 18 ein hohes Gegenmoment bereitgestellt werden, das eine effektive Auslöschung der durch die oszillierenden Massen verursachten Vibrationen bewirken kann.

Dabei ist grundsätzlich vorstellbar, das Lagerstück 100 der Massenausgleichseinrichtung analog dem verstellbaren Trägerelement 50 des Exzenterkoppeltriebs 40 auszuführen, vgl. etwa Fig. 3 und Fig. 4.

Besonders bevorzugt ist es, wenn, wie etwa in Fig. 9 gezeigt, sowohl der Exzenterkoppeltrieb 40 als auch die Massenausgleichseinrichtung 90 verstellbar bzw. verlagerbar sind. Somit kann das Handwerkzeug 10 in besonders geeigneter Weise auf den Einsatzzweck abgestimmt werden.

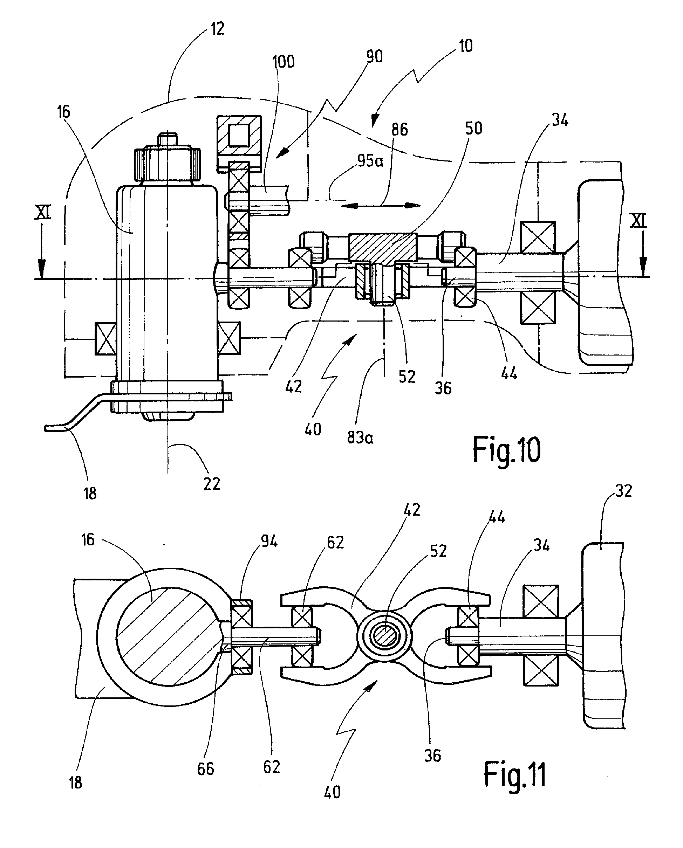

In den Fig. 10 und 11 ist eine alternative Konfiguration des Handwerkzeugs 10 dargestellt, die sich etwa dann anbietet, wenn die Motorwelle 34 im Wesentlichen mit der Ebene, in der der Ausleger 66 der Werkzeugspindel 16 verschwenkt wird, fluchten soll. Dabei ist das Koppelglied 42 des Exzenterkoppeltriebs 40 schwenkbar um eine Schwenkachse 83a angeordnet, die im Wesentlichen parallel zur Längsachse 22 der Werkzeugspindel 16 angeordnet ist. Die Komponenten des Exzenterkoppeltriebs 40 können grundsätzlich analog zur in den Fig. 2 und 3 gezeigten Ausgestaltung ausgebildet sein. Sowohl das Exzenterlager 44 als auch das spindelseitige Lager 62 sind vorzugsweise als ballige oder sphärische Lager ausgebildet.

Auch der Gestaltung gemäß der Fig. 10 und 11 ist eine Massenausgleichseinrichtung 90 zugeordnet, deren Komponenten etwa der Gestaltung gemäß der Fig. 6 und 7 entsprechen können. Auch die Massenausgleichseinrichtung 90 kann sowohl auf einem gestellfesten Lagerstück 100 angeordnet sein als auch auf einem verfahrbaren Lagerstück 100a gelagert sein, wie in Fig. 9 gezeigt.

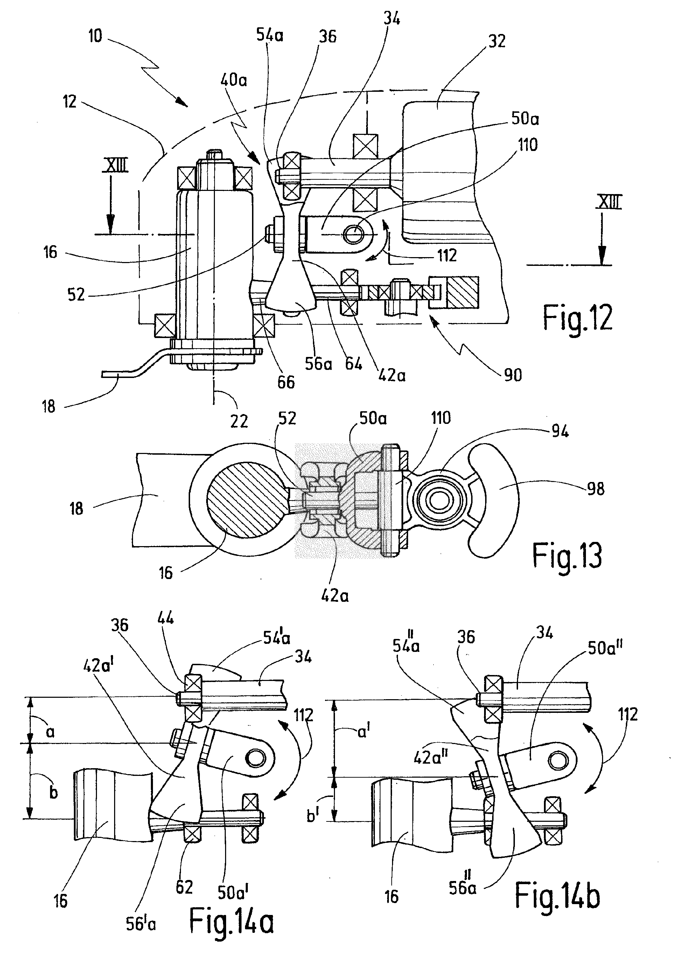

In den Fig. 12, 13, 14a und 14b ist eine weitere Ausgestaltung eines Handwerkzeugs 10 dargestellt, das einen alternativen Exzenterkoppeltrieb 40a aufweist. Dabei erfolgt die Übertragung des durch den Umlauf des Exzenterabschnitts 36 bewirkten Hubs zum Ausleger 66 der Werkzeugspindel 16 grundsätzlich gemäß den vorgenannten Ausgestaltungen.

Das Koppelglied 42a ist dabei jedoch in besonderer Weise an einem Trägerelement 50a aufgenommen, das um eine Schwenkachse 110 gegenüber dem Gehäuse 12 des Handwerkzeugs 10 verschwenkbar ist, um die Übersetzung zwischen dem Antriebshub und dem Abtriebshub in geeigneter Weise zu variieren.

Dabei weist das Koppelglied 42a die Form einer Doppelgabel auf, wobei die motorseitige Gabel 54a und die spindelseitige Gabel 56a nach außen hin fächerförmig erweitert sind. Somit ist auch bei großen Schwenkwinkeln des Trägerelements 50a gegenüber dem Gehäuse 12 noch eine hinreichende Überdeckung zwischen der motorseitigen Gabel 54a und dem Exzenterlager 44 bzw. zwischen der spindelseitigen Gabel 56a und dem spindelseitigen Lager 62 gewährleistet, vgl. auch Fig. 14a. In Fig. 12 ist das Trägerelement 50a etwa in einer Normalstellung positioniert, wogegen das Trägerelement 50a' in Fig. 14a deutlich im Uhrzeigersinn ausgelenkt ist und das Trägerelement 54a" in Fig. 14b deutlich im Gegenuhrzeigersinn ausgelenkt ist. Die Verschwenkung des Trägerelements 50a wird durch einen mit 112 bezeichneten Doppelpfeil veranschaulicht. In Zusammenschau der Fig. 14a und 14b mit den Fig. 5a und 5b wird ersichtlich, dass auch ein Verschwenken des Trägerelements 50a eine Variation der Übersetzung des Koppelglieds 42a bewirken kann. Die übrige Ausgestaltung dieses Ausführungsbeispiels kann grundsätzlich mit der Ausgestaltung der vorgenannten Ausführungen korrespondieren.

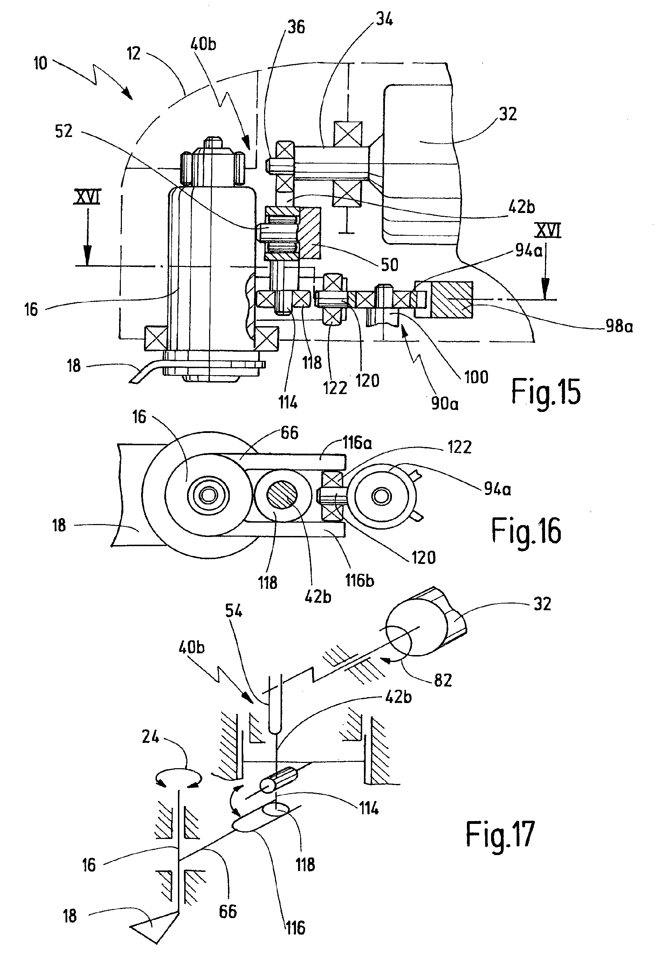

In den Fig. 15 und 16 ist ein weiteres Ausführungsbeispiel gezeigt, bei dem ein Exzenterkoppeltrieb 40b vorgesehen ist, der ein Koppelglied 42b aufweist, das an seinem dem Exzenterabschnitt 36 der Motorwelle 34 zugewandten Ende eine motorseitige Gabel 54 aufweist, vgl. auch die vereinfachte symbolische Darstellung in Fig. 17. An seinem dem Ausleger 66 der Werkzeugspindel 16 zugewandten Ende weist das Koppelglied 42b dagegen einen Lagerzapfen 114 auf, an dem ein Spindelkoppellager 118 aufgenommen ist, das mit Gabelarmen 116a, 116b zusammenwirkt, die dem Ausleger 66 der Werkzeugspindel 16 zugeordnet sind. Der Lagerzapfen 114 ist dabei in der in Fig. 15 gezeigten Neutralstellung im Wesentlichen parallel zur Werkzeugspindel 16 angeordnet.

Die Ausgestaltung weist ferner eine Massenausgleichseinrichtung 90a auf, die mit einem Massestück 94a versehen ist, das einen Zapfen 120 aufweist, der über ein Koppellager 122 mit den Gabelarmen 116a, 116b des Auslegers 66 der Werkzeugspindel 16 zusammenwirkt. Dabei kann lediglich eine Gabel, die durch die Gabelarme 116a, 116b des Auslegers 66 verkörpert ist, sowohl mit dem Exzenterkoppeltrieb 40b als auch mit der Massenausgleichseinrichtung 90a zusammenwirken. In Fig. 17 wurde aus Veranschaulichungsgründen auf die Darstellung der Massenausgleichseinrichtung 90a verzichtet.

Auch eine derartige Ausgestaltung kann ein gegenüber dem Gehäuse 12 verlagerbares Trägerelement 50 aufweisen. Ebenso kann das Lagerstück 100, an dem das Massestück 94a aufgenommen ist, relativ zum Gehäuse 12 verlagert werden. Dies kann etwa gemäß den vorgenannten Ausführungsbeispielen erfolgen.

Die in den Fig. 15, 16 und 17 veranschaulichte Ausgestaltung weist ferner die Besonderheit auf, dass bei einem Verfahren des Trägerelements 50, etwa gemäß der Fig. 5a, 5b und Fig. 14a, 14b, der dort gezeigte Abstand b nicht variiert wird, da das Koppellager 118 auch bei einer Verlagerung des Trägerelements 50 von den Gabelarmen 116a, 116b eingefasst bleibt, so dass sich der relevante Hebelarm zum Trägerzapfen 52 dabei nicht verändert. Hingegen werden bei einer Verlagerung des Trägerelements 50 sowohl der Abstand a, der dem Abstand zwischen der Motorwelle 34 und dem Trägerzapfen 52 entspricht, als auch der Abstand c, der dem Abstand der Motorwelle 34 vom Koppellager 118 entspricht, verändert. Auch auf diese Weise können geeignete Übersetzungsverhältnisse am Koppelglied 42b bewirkt werden, so dass sich ein gewünschter Verschwenkwinkel an der Werkzeugspindel 16 ergibt.

Auch die übrige Gestaltung dieses Ausführungsbeispiels kann sich an den vorgenannten Ausführungen orientieren.

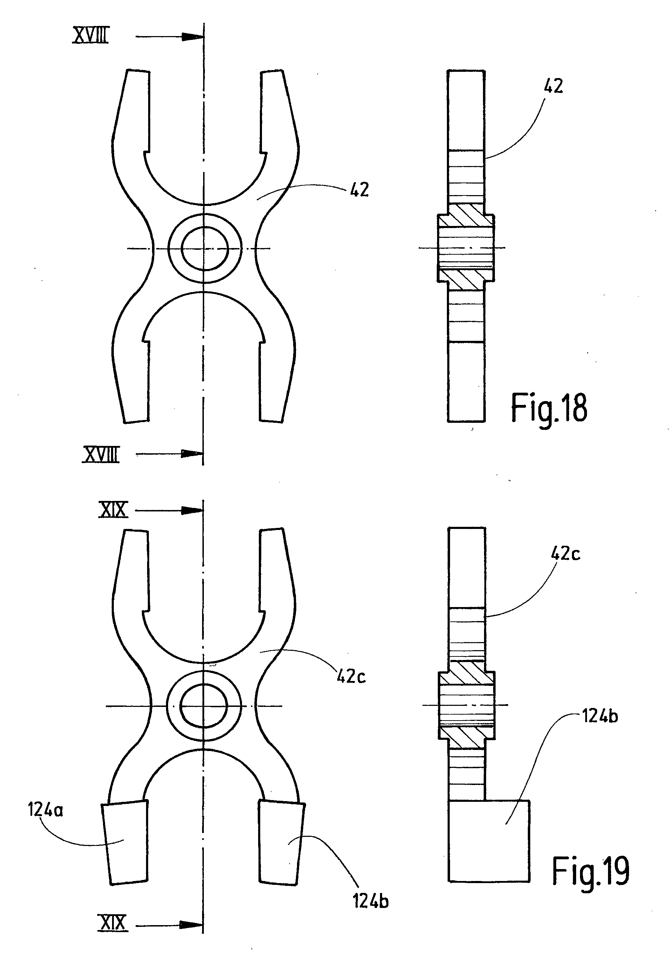

In den Fig. 18 und 19 sind zwei Koppelglieder 42 und 42c jeweils frontal und in einer Schnittansicht dargestellt. Das Koppelglied 42 ist in Längs- und Quererstreckung jeweils im Wesentlichen symmetrisch ausgestaltet. Durch diese Maßnahme kann sich die Fertigung deutlich vereinfachen. Die Gefahr einer Fehlmontage kann in hohem Maße reduziert werden.

Alternativ ist das Koppelglied 42c mit einer unsymmetrischen Ausgestaltung versehen. Hierzu ist im Bereich einer Gabel eine Massenanhäufung 124a, 124b vorgesehen. Die Massenanhäufung 124a, 124b kann grundsätzlich an der motorseitigen Gabel 54 oder der spindelseitigen Gabel 56 ausgebildet sein, vgl. hierzu etwa Fig. 3. Die Massenanhäufung 124a, 124b kann etwa als konstruktive Aufdickung im Bereich der Gabel ausgebildet sein. Auf diese Weise kann bereits durch die Gestaltung des Koppelgliedes 42c ein Massenausgleich zur Minderung von Vibrationsbelastungen erfolgen.

Wenn die Massenanhäufung 124a, 124b der motorseitigen Gabel 54 zugeordnet ist, kann die durch den Exzenterabschnitt 36 eingebrachte Massenunwucht verstärkt werden, um der - durch den Exzenterkoppeltrieb 40 grundsätzlich dazu gegenläufig angetriebenen - Werkzeugspindel 16 entgegen zu wirken. In alternativer Weise kann eine Anordnung der Massenanhäufung 124a, 124b an der spindelseitigen Gabel 56 eine Verstärkung der durch die Werkzeugspindel 16 und das daran befestigte Werkzeug 18 bedingten Massenkräfte bewirken. Die genaue Anordnung der Massenanhäufung 124a, 124b kann unter Berücksichtigung der Geometrie des Werkzeugs 18 und der jeweiligen Relativlage des Werkzeugs 18 gegenüber der Werkzeugspindel 16, insbesondere der Winkelorientierung des befestigten Werkzeugs 18, erfolgen.

## Patentansprüche

1. Handwerkzeug mit einem Gehäuse (12) mit einem Getriebekopf (14), mit einer durch einen Motor (32) rotatorisch antreibbaren Motorwelle (34), die über einen Exzenterkoppeltrieb (40) mit einer Werkzeugspindel (16) zu deren Antrieb koppelbar ist, wobei die Werkzeugspindel (16) um ihre Längsachse (22) drehoszillatorisch antreibbar und zur Aufnahme eines Werkzeugs (18) ausgebildet ist, wobei der Exzenterkoppeltrieb (40) ein Koppelglied (42) aufweist, das mit der Motorwelle (34) und der Werkzeugspindel (16) gekoppelt ist, wobei das Koppelglied (42) ferner an einem mit dem Gehäuse (12) gekoppelten Trägerelement (50) schwenkbar aufgenommen ist, wobei das Koppelglied (42) als Hebel oder als Winkelhebel ausgebildet ist, wobei zwischen zwei Hebelabschnitten (a, b) eine Lagerstelle (46) zur Lagerung am Trägerelement (50) vorgesehen ist, und wobei die Motorwelle (34) im Wesentlichen senkrecht zur Werkzeugspindel (16) angeordnet ist, **dadurch gekennzeichnet, dass** das Koppelglied (42) um eine Achse (83) verschwenkbar ist, die im Wesentlichen parallel zur Motorwelle (34) angeordnet ist.

2. Handwerkzeug (10) nach Anspruch 1, **dadurch gekennzeichnet, dass** das Koppelglied (42) als Doppelgabel (54, 56) ausgeführt ist und Kontaktflächen (58, 60) zur Übertragung der vom Motor (32) erzeugten Antriebsbewegung in eine drehoszillatorische Abtriebsbewegung der Werkzeugspindel (16) aufweist.

3. Handwerkzeug (10) nach Anspruch 1 oder 2, **dadurch gekennzeichnet, dass** das Trägerelement (50) relativ zum Gehäuse (12) verlagerbar ist, und dass ein Stellglied (88) vorgesehen ist, das mit dem Trägerelement (50) zu dessen Verlagerung koppelbar ist.

4. Handwerkzeug (10) nach einem der Ansprüche 1 bis 3, **dadurch gekennzeichnet, dass** das Trägerelement (50) relativ zum Gehäuse (12) translatorisch verschiebbar oder verschwenkbar ist.

5. Handwerkzeug (10) nach einem der vorhergehenden Ansprüche, **dadurch gekennzeichnet, dass** der Exzenterkoppeltrieb (40) mit einer Massenausgleichseinrichtung (90) gekoppelt ist, wobei der Exzenterkoppeltrieb (40) dazu ausgebildet ist, die Massenausgleichseinrichtung (90) in eine der drehoszillatorischen Abtriebsbewegung der Werkzeugspindel (16) entgegengerichtete Ausgleichsbewegung zu versetzen.

6. Handwerkzeug (10) nach Anspruch 5, **dadurch gekennzeichnet, dass** die Werkzeugspindel (16) über einen Ausleger (66) mit der Massenausgleichseinrichtung (90) zu deren Antrieb gekoppelt ist.

7. Handwerkzeug (10) nach Anspruch 5 oder 6, **dadurch gekennzeichnet, dass** die Massenausgleichseinrichtung (90) ein Massestück (94) aufweist, das an einem Lagerstück (100) aufgenommen ist, das relativ zum Gehäuse (12) translatorisch verschiebbar oder verschwenkbar ist.

8. Handwerkzeug (10) nach einem der vorhergehenden Ansprüche, **dadurch gekennzeichnet, dass** das Koppelglied (42) und zumindest die Motorwelle (34) oder die Werkzeugspindel (16) über zumindest ein balliges Lager (44, 62, 118) miteinander gekoppelt sind.

9. Handwerkzeug (10) nach Anspruch 7, **dadurch gekennzeichnet, dass** das Massestück (94) um eine Achse (95a) verschwenkbar ist, die im Wesentlichen parallel zur Motorwelle (34) angeordnet ist.

10. Handwerkzeug (10) nach Anspruch 7, **dadurch gekennzeichnet, dass** das Massestück (94) um eine Achse (95) verschwenkbar ist, die im Wesentlichen senkrecht zur Motorwelle (34) angeordnet ist.

11. Handwerkzeug (10) nach einem der vorhergehenden Ansprüche, **dadurch gekennzeichnet, dass** das Koppelglied (42) eine Massenanhäufung (124a, 124b) zum Massenausgleich aufweist.

12. Handwerkzeug (10) nach einem der vorhergehenden Ansprüche, **dadurch gekennzeichnet, dass** die Werkzeugspindel (16) einen Ausleger (66) aufweist, der als Mitnehmergabel (116a, 116b) ausgebildet ist und mit einem an einem werkzeugseitigen Ende des Koppelglieds (42) aufgenommenen Lager (118) gekoppelt ist.

## Claims

1. A hand-held tool comprising a housing (12) with a gear head (14), a motor shaft (34) that can be driven in rotation by a motor (32) and that can be coupled, by means of an eccentric coupling mechanism (40), to a tool spindle (16) in order to drive the latter, wherein the tool spindle (16) can be driven in an oscillatory rotating manner about the longitudinal axis (22) thereof and is designed to receive a tool (18), wherein the eccentric coupling mechanism (40) comprises a coupling member (42) which is coupled to the motor shaft (36) and to the tool spindle (16), wherein the coupling member (42) is furthermore mounted pivotably on a carrier element (50) coupled to the housing (12), wherein the coupling member (42) is designed as a lever or as a bent lever, wherein a bearing location (46) for support on the carrier element (50) is provided between two lever sections (a, b), and wherein the motor shaft (34) is arranged substantially perpendicular to the tool spindle (16), **characterized in that** the coupling member (42) is pivotable about an axis (83) which is arranged substantially parallel to the motor shaft (34).

2. The hand-held tool (10) of claim 1, **characterized in that** the coupling member (42) is configured as a double fork (54, 56) and comprises contact surfaces (58, 60) for converting the driving motion produced by the motor (32) into an oscillatory rotary output motion of the tool spindle (16).

3. The hand-held tool (10) of claim 1 or 2, **characterized in that** the carrier element (50) can be moved relative to the housing (12), and **in that** an actuating element (88), which can be coupled to the carrier element (50) in order to move the latter, is provided.

4. The hand-held tool (10) of any of claims 1 to 3, **characterized in that** the carrier element (50) can be moved in translation or pivoted relative to the housing (12).

5. The hand-held tool (10) of any of the preceding claims, **characterized in that** the eccentric coupling mechanism (40) is coupled to a mass balancing device (90), wherein the eccentric coupling mechanism (40) is configured to impart to the mass balancing device (90) a balancing motion opposed to the oscillatory rotary output motion of the tool spindle (16).

6. The hand-held tool (10) of claim 5, **characterized in that** the tool spindle (16) is coupled via a side arm (66) to the mass balancing device (90) in order to drive the latter.

7. The hand-held tool (10) of any of claims 5 or 6, **characterized in that** the mass balancing device (90) has a mass piece (94) which is mounted on a bearing piece (100) that can be moved in translation or pivoted relative to the housing (12).

8. The hand-held tool (10) of any of the preceding claims, **characterized in that** the coupling member (42) and at least the motor shaft (36) or the tool spindle (16) are coupled to one another by at least one convex bearing (44, 62, 118).

9. The hand-held tool (10) of claim 7, **characterized in that** the mass piece (94) can be pivoted about an axis (95a) which is arranged substantially parallel to the motor shaft (36).

10. The hand-held tool (10) of claim 7, **characterized in that** the mass piece (94) can be pivoted about an axis (95) which is arranged substantially perpendicular to the motor shaft (36).

11. The hand-held tool (10) of any of the preceding claims, **characterized in that** the coupling member (42) comprises a mass accumulation (124a, 124b) for mass balancing.

12. The hand-held tool (10) of any of the preceding claims, **characterized in that** the tool spindle (16) has a side arm (66) which is configured as a driver fork (116a, 116b) and is coupled to a bearing (118) mounted on a tool-facing end of the coupling member (42).

## Revendications

1. Outil manuel comprenant un boîtier (12) avec une tête de transmission (14) avec un arbre de moteur (34) pouvant être entraîné en rotation par un moteur (32), lequel arbre de moteur peut être accouplé en vue de son entraînement, par le biais d'un entraînement d'accouplement excentrique (40), à une broche d'outil (16), la broche d'outil (16) étant réalisée de manière à pouvoir être entraînée en rotation oscillatoire autour de son axe longitudinal (22) et étant réalisée de manière à recevoir un outil (18), l'entraînement d'accouplement excentrique (40) présentant un organe d'accouplement (42) qui est accouplé à l'arbre de moteur (34) et à la broche d'outil (16), l'organe d'accouplement (42) étant en outre reçu de manière pivotante au niveau d'un élément porteur (50) accouplé au boîtier (12), l'organe d'accouplement (42) étant réalisé sous forme de levier ou sous forme de levier coudé, un point de palier (46) pour le support sur palier sur l'élément porteur (50) étant prévu entre deux portions de levier (a, b), et l'arbre de moteur (34) étant disposé essentiellement perpendiculairement à la broche d'outil (16), **caractérisé en ce que** l'organe d'accouplement (42) peut pivoter autour d'un axe (83) qui est disposé essentiellement parallèlement à l'arbre de moteur (34).

2. Outil manuel (10) selon la revendication 1, **caractérisé en ce que** l'organe d'accouplement (42) est réalisé sous forme de double fourche (54, 56) et présente des surfaces de contact (58, 60) pour le transfert du mouvement d'entraînement généré par le moteur (32) en un mouvement de prise de force rotatif oscillatoire de la broche d'outil (16).

3. Outil manuel (10) selon la revendication 1 ou 2, **caractérisé en ce que** l'élément porteur (50) peut être déplacé par rapport au boîtier (12) et **en ce qu'**un organe de réglage (88) est prévu, lequel peut être accouplé à l'élément porteur (50) en vue de son déplacement.

4. Outil manuel (10) selon l'une quelconque des revendications 1 à 3, **caractérisé en ce que** l'élément porteur (50) peut être déplacé en translation ou peut être pivoté par rapport au boîtier (12).

5. Outil manuel (10) selon l'une quelconque des revendications précédentes, **caractérisé en ce que** l'entraînement d'accouplement excentrique (40) est accouplé à un dispositif d'équilibrage de masse (90), l'entraînement d'accouplement excentrique (40) étant réalisé de manière à animer le dispositif d'équilibrage de masse (90) d'un mouvement d'équilibrage opposé au mouvement de prise de force rotatif oscillatoire de la broche d'outil (16).

6. Outil manuel (10) selon la revendication 5, **caractérisé en ce que** la broche d'outil (16) est accouplée par le biais d'un bras (66) au dispositif d'équilibrage de masse (90) en vue de son entraînement.

7. Outil manuel (10) selon la revendication 5 ou 6, **caractérisé en ce que** le dispositif d'équilibrage de masse (90) présente une masselotte (94) qui est reçue sur une pièce de palier (100) qui peut être déplacée en translation ou pivotée par rapport au boîtier (12).

8. Outil manuel (10) selon l'une quelconque des revendications précédentes, **caractérisé en ce que** l'organe d'accouplement (42) et au moins l'arbre de moteur (34) ou la broche d'outil (16) sont accouplés l'un à l'autre par le biais d'au moins un palier sphérique (44, 62, 118).

9. Outil manuel (10) selon la revendication 7, **caractérisé en ce que** la masselotte (94) peut pivoter autour d'un axe (95a) qui est disposé essentiellement parallèlement à l'arbre de moteur (34).

10. Outil manuel (10) selon la revendication 7, **caractérisé en ce que** la masselotte (94) peut pivoter autour d'un axe (95) qui est disposé essentiellement perpendiculairement à l'arbre de moteur (34).

11. Outil manuel (10) selon l'une quelconque des revendications précédentes, **caractérisé en ce que** l'organe d'accouplement (42) présente une accumulation de masse (124a, 124b) pour l'équilibrage de masse.

12. Outil manuel (10) selon l'une quelconque des revendications précédentes, **caractérisé en ce que** la broche d'outil (16) présente un bras (66) qui est réalisé sous forme de fourche d'entraînement (116a, 116b) et qui est accouplé à un palier (118) reçu au niveau d'une extrémité de l'organe d'accouplement (42) du côté de l'outil.
